# EUROPÄISCHE PATENTANMELDUNG

(11) **EP 3 207 780 A2**
(43) Veröffentlichungstag der Anmeldung: **23.08.2017**
(21) Anmeldenummer: 17401008.2
(22) Anmeldetag: 06.02.2017
(51) Int. Cl.: A01B 59/042

(54) **KUPPLUNGSVORRICHTUNG**

(30) Priorität: 10.02.2016 DE 102016102246
(71) Anmelder: Amazonen-Werke H. Dreyer GmbH & Co. KG, 49205 Hasbergen (DE)
(72) Erfinder: Scherf, Silvio, 39444 Hecklingen OT Cochstedt (DE)

(57) **Zusammenfassung**

Kupplungsvorrichtung mit als Wechselzapfen ausgebildeten Unterlenkeranschlusszapfen einer landwirtschaftlichen Maschine, wobei die Unterlenkeranschlusszapfen in Aussparungen der Kupplungsvorrichtung einsteckbar und mittels einer Schraubverbindung in den Aussparungen an der Kupplungsvorrichtung zu befestigen sind, wobei die Aussparungen und der in die Aussparungen einsteckbare Bereich der Zapfen eine aneinander angepasste Kontur aufweisen. Um eine verbesserte und dauerhaftere Anordnung von Unterlenkeranschlusszapfen an Kuppelvorrichtungen, wie Kuppelrahmen, Anschlussquerbalken einer Zugdeichsel, etc. zu schaffen, ist vorgesehen, dass die aneinander angepasste Kontur der Aussparungen und der in die Aussparungen einsteckbare Bereich der Zapfen konusförmig ausgebildet sind.

## Beschreibung

Die Erfindung betrifft eine Kupplungsvorrichtung gemäß des Oberbegriffes des Patentanspruches 1.

Eine derartige Kupplungsvorrichtung ist in der DE 1 937 906 U1 beschrieben. Diese Kopplungsvorrichtung weist einschraubbare Wechselzapfen für Unterlenkeranschlusszapfen auf. Sowohl die Aussparungen in dem Kuppelrahmen, in welche die Anschlusszapfen einsetzbar sind, sowie die in die jeweilige Aussparung einsetzbaren Bereiche der Anschlusszapfen sind zylindrisch ausgebildet. Um eine ausreichende Formschlüssigkeit zwischen Aussparung und in diese Aussparung einsetzbare Bereiche der Anschlusszapfen zu erreichen muss eine sehr hohe Fertigungsgenauigkeit eingehalten werden, damit die Anschlusszapfen in den Aussparungen des Kuppelrahmens nicht ausschlagen. Dieses gelingt meist nicht. In diesen Fällen lösen sich dann nach längerer Einsatzzeit die Anschlusszapfen in den Aussparungen, so dass sie in diesen wackeln und es zu erhöhtem Verschleiß kommt. In der DE 10 2012 102 757 A1 ist ein Anschlussquerbalken einer Zugdeichsel mit Unterlenkeranschlusszapfen gezeigt. Auch diese Anschlusszapfen sind üblicherweise entsprechend der vorgenannten DE 1 937 906 U1 in zylinderförmige Aussparungen des Anschlussquerbalkens eingesetzt, so dass es zu den vorstehend geschilderten Problemen kommt.

Der Erfindung liegt die Aufgabe zu Grunde, eine verbesserte und dauerhaftere Anordnung von Unterlenkeranschlusszapfen an Kuppelvorrichtungen, wie Kuppelrahmen, Anschlussquerbalken einer Zugdeichsel, etc. zu schaffen.

Diese Aufgabe wird erfindungsgemäß dadurch gelöst, dass die aneinander angepasste Kontur der Aussparungen und der in die Aussparungen einsteckbare Bereich der Zapfen konusförmig ausgebildet sind.

Infolge dieser Maßnahmen werden Wechselzapfen mit einem Spannkonus für das Anhängen von landwirtschaftlichen Geräten an Zugmaschinen geschaffen. Durch das Festziehen des konusförmigen Bereiches des Wechselzapfens in der jeweiligen Aussparung der jeweiligen Kuppelvorrichtung wird durch die dem Wechselzapfen zugeordnete Schraubsicherung ein dauerhafter fester Sitz des jeweiligen Wechselzapfens in der jeweiligen Aussparung der Kuppelvorrichtung erreicht. Zusätzlich ergibt sich noch eine gewünschte Verdrehsicherung für den Wechselzapfen.

Zur Erreichung des festen Sitzes ist es vorteilhaft, dass die aneinander angepasste Kontur der Aussparungen und der in die Aussparungen einsteckbare Bereich der Zapfen als Spannkonus ausgebildet ist.

Um über den Spannkonus einen möglichst dauerhaften festen Sitz des jeweiligen Wechselzapfens in der jeweiligen Aussparung der Kuppelvorrichtung zur erreichen, ist vorgesehen, dass der konusförmige Bereich einen Konuswinkel von 5-85°, vorzugsweise im Bereich von 30° aufweist.

In einer möglichen Ausgestaltung des konusförmiger Bereiches ist vorgesehen, dass der konusförmige Bereich leicht gekrümmt mit einem Radius von 30 bis 100mm, vorzugsweise im Bereich von 50mm ausgebildet ist.

Weitere Einzelheiten der Erfindung sind der Beispielsbeschreibung und den Zeichnungen zu entnehmen. Die Zeichnungen zeigen
- Fig.1: eine als Grubber ausgebildete landwirtschaftliche Maschine mit einem als Querbalken mit als Wechselzapfen ausgebildeten Unterlenkeranschlusszapfen ausgestatteten Ankuppelvorrichtung in Prinzipdarstellung und in perspektivischer Darstellung,
- Fig.2: die in vergrößerter Weise dargestellte Kuppelvorrichtung gemäß Fig.1,

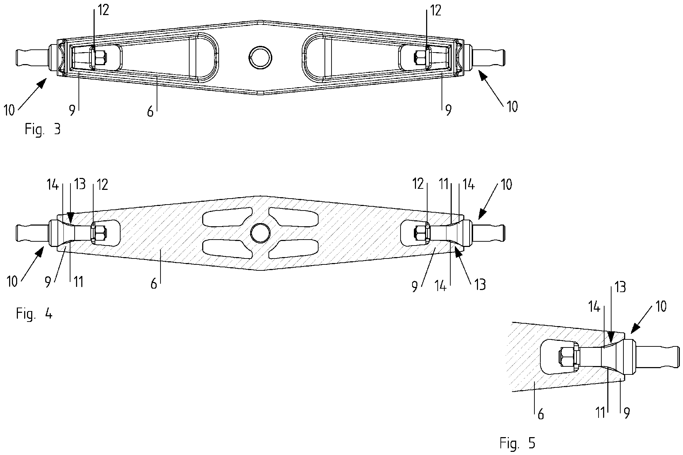

- Fig.3: den Querbalken mit als Wechselzapfen ausgebildeten Unterlenkeranschlusszapfen in der Ansicht von vorn,
- Fig.4: den Querbalken mit als Wechselzapfen ausgebildeten Unterlenkeranschlusszapfen in der Ansicht von vorn, jedoch im Schnitt,
- Fig.5: die Anordnung des als Wechselzapfen ausgebildeten Unterlenkeranschlusszapfens in der Aussparung im Querbalken in der Darstellungsweise nach Fig.4, jedoch im vergrößertem Maßstab und

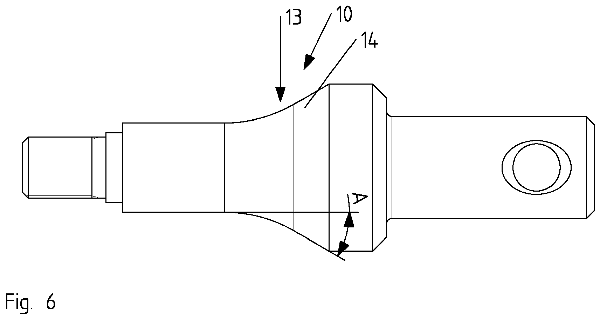

- Fig.6: den als Wechselzapfen ausgebildeten Unterlenkeranschlusszapfen in der Darstellungsweise nach Fig.5, jedoch im vergrößertem Maßstab.

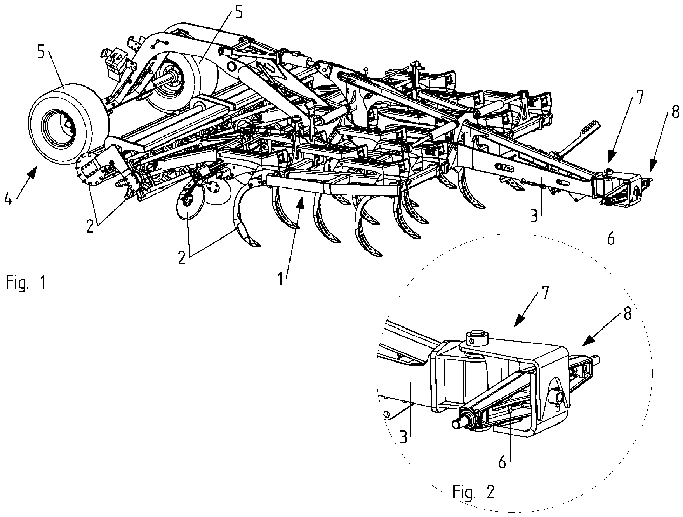

Die landwirtschaftliche Maschine in Fig.1 ist als gezogener Grubber ausgebildet und weist einen Rahmen 1 auf, an dem verschiedenartige Bodenbearbeitungswerkzeuge 2 angeordnet sind. Auf der Vorderseite des Rahmens 1 ist eine Zugdeichsel 3 und auf der Rückseite des Rahmens 1 ist ein Fahrwerk 4 mit Laufrädern 5 zum Transport der Maschine angeordnet. An der Vorderseite der Zugdeichsel 3 ist der Kupplungsquerbalken 6 in bekannter Weise in Art eines Kreuzgelenkes 7 gegenüber der Zugdeichsel 3 bewegbar angeordnet.

Der Kupplungsquerbalken 6 ist Bestandteil der Kupplungsvorrichtung 8 zur Ankopplung der landwirtschaftlichen Maschine an die Unterlenker eines die Maschine ziehenden Ackerschleppers. An jedem äußeren seitlichen Enden 9 des Kupplungsquerbalken 6 sind als Wechselzapfen 10 ausgebildete Unterlenkeranschlusszapfen zur Ankopplung der landwirtschaftlichen Maschine an die Unterlenker des vor erwähnten Ackerschleppers angeordnet. In den äußeren seitlichen Enden 9 des Kupplungsquerbalkens 6 sind Aussparungen 11 zur Aufnahme der Wechselzapfens 10 angeordnet. Die Unterlenkeranschlusszapfen 10 sind in diese Aussparungen 11 des Querbalken 6 der Kupplungsvorrichtung 8 einsteckbar und mittels der Schraubverbindung 12 in den Aussparungen 11 an den Querbalken 6 der Kupplungsvorrichtung 8 sicher zu befestigen sind. Hierzu weisen die Aussparungen 11 und die in die Aussparungen 11 einsteckbaren Bereiche 13 der Zapfen 10 eine aneinander angepasste konusförmige Kontur 14 auf. Somit sind aneinander angepassten Konturen 14 der Aussparungen 11 und der in die Aussparungen 11 einsteckbare Bereich 13 der Zapfen 10 konusförmig ausgebildet.

Hierdurch bilden die aneinander angepassten Konturen 14 der Aussparungen 11 und der in die Aussparungen 11 einsteckbare Bereich 13 der Zapfen 10 einen Spannkonus. Hierbei weist konusförmige Bereich 13 der Zapfen 10 einen Konuswinkel A von 5 - 85°, vorzugsweise im Bereich von 30° auf. Weiterhin ist der konusförmige Bereich 13 der Zapfen 10 leicht gekrümmt und weißt mit einen Radius R von 30 bis 100mm auf, der vorzugsweise im Bereich von 50mm ausgebildet ist.

Mit Unterstützung der Schraubenverbindung 12 mit dem kegelstumpfförmigen, konusartigen Ansatz wird der feste Sitz, des Zapfens 10 durch den konusförmigen Bereich 13 unterstützt.

## Patentansprüche

1. Kupplungsvorrichtung mit als Wechselzapfen ausgebildeten Unterlenkeranschlusszapfen einer landwirtschaftlichen Maschine, wobei die Unterlenkeranschlusszapfen in Aussparungen der Kupplungsvorrichtung einsteckbar und mittels einer Schraubverbindung in den Aussparungen an der Kupplungsvorrichtung zu befestigen sind, wobei die Aussparungen und der in die Aussparungen einsteckbare Bereich der Zapfen eine aneinander angepasste Kontur aufweisen, **dadurch gekennzeichnet, dass** die aneinander angepasste Kontur der Aussparungen und der in die Aussparungen einsteckbare Bereich der Zapfen konusförmig ausgebildet sind.

2. Kupplungsvorrichtung nach Anspruch 1, **dadurch gekennzeichnet, dass** die aneinander angepasste Kontur der Aussparungen und der in die Aussparungen einsteckbare Bereich der Zapfen als Spannkonus ausgebildet ist.

3. Kupplungsvorrichtung nach zumindest einem der vorstehenden Ansprüche, **dadurch gekennzeichnet, dass** der konusförmige Bereich einen Konuswinkel von 5 - 85°, vorzugsweise im Bereich von 30° aufweist.

4. Kupplungsvorrichtung nach Anspruch 3, **dadurch gekennzeichnet, dass** der konusförmige Bereich leicht gekrümmt mit einem Radius von 30 bis 100mm, vorzugsweise im Bereich von 50mm ausgebildet ist.
